(19) Europäisches Patentamt / European Patent Office / Office européen des brevets

(11) **EP 2 940 052 A1**

(12) **EUROPEAN PATENT APPLICATION**
published in accordance with Art. 153(4) EPC

(43) Date of publication:
**04.11.2015 Bulletin 2015/45**

(51) Int Cl.:
***C08G 18/65*** (2006.01)   ***C09D 5/02*** (2006.01)
***C09D 175/12*** (2006.01)

(21) Application number: **13866863.7**

(86) International application number:
**PCT/JP2013/083010**

(22) Date of filing: **10.12.2013**

(87) International publication number:
**WO 2014/103689 (03.07.2014 Gazette 2014/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.12.2012   JP 2012280993**

(71) Applicant: **UBE Industries, Ltd.
Yamaguchi 755-8633 (JP)**

(72) Inventors:
• **YAMADA, Takeshi
Ube-shi
Yamaguchi 755-8633 (JP)**
• **ADACHI, Fumio
Ube-shi
Yamaguchi 755-8633 (JP)**
• **NAIKI, Masahiro
Ube-shi
Yamaguchi 755-8633 (JP)**
• **ISHIHARA, Yusuke
Ube-shi
Yamaguchi 755-8633 (JP)**

(74) Representative: **Adam, Holger
Kraus & Weisert
Patentanwälte PartGmbB
Thomas-Wimmer-Ring 15
80539 München (DE)**

(54) **AQUEOUS POLYURETHANE RESIN DISPERSION AND USE OF SAME**

(57)   A task of the present invention is to obtain an aqueous polyurethane resin dispersion which is advantageous not only in that the dispersion exhibits excellent storage stability in an aqueous medium, but also in that after the dispersion is dried, a film having satisfactory flexibility is formed. In the present invention, there is provided an aqueous polyurethane resin dispersion comprising a polyurethane resin dispersed in an aqueous medium, wherein the polyurethane resin is obtained by reacting (A) a polyurethane prepolymer with (B) a chain extender, wherein the polyurethane prepolymer (A) is obtained by reacting (a) a polycarbonate polyol compound, (b) a polyisocyanate compound, (c) an acid group-containing polyol compound, and (d) a compound having one acid group and one hydroxyl group, wherein the chain extender (B) contains (B-1) a polyamine compound having three or more amino group(s) and/or imino group (s) in total.

**Description**

FIELD OF THE INVENTION

The present invention relates to an aqueous polyurethane resin dispersion comprising a polyurethane resin dispersed in an aqueous medium. Further, the present invention relates to a coating composition and a paint composition, each comprising the aqueous polyurethane resin dispersion, and a polyurethane resin film produced from a composition comprising the polyurethane resin dispersion.

BACKGROUND ART

Polycarbonate polyol is a useful compound as a raw material for producing a polyurethane resin by using a reaction with an isocyanate compound, wherein the polyurethane resin is used for, for example, a rigid foam, a flexible foam, a coating composition, a bonding agent, synthetic leather, and an ink binder.

Further, it has been known that a coating film obtained by applying an aqueous polyurethane resin dispersion using polycarbonate polyol as a raw material has excellent light resistance, excellent heat resistance, excellent hydrolytic resistance, and excellent oil resistance (see patent document 1).

As an aqueous polyurethane resin dispersion which forms a film having high flexibility, a composition having a crosslinked structure introduced into a polyether polyurethane resin using a polyamine compound having three or more amino groups in total has been reported (see patent document 2).

Further, an aqueous polyether polyurethane resin comprising an aliphatic hydrocarbon compound having one carboxyl group and one hydroxyl group has been reported (see patent document 3).

PRIOR ART REFERENCES

Patent Documents

Patent document 1: Japanese Unexamined Patent Publication No. Hei 10-120757
Patent document 2: Japanese Patent Application prior-to-examination Publication (kohyo) No. 2001-521953
Patent document 3: Japanese Unexamined Patent Publication No. 2004-231813

DISCLOSURE OF THE INVENTION

Problems to be Solved by the Invention

However, the aqueous polyurethane resin dispersion using polycarbonate polyol as a raw material described in patent document 1 is disadvantageous in that the dispersibility of the polyurethane resin in water is poor due to high cohesive force of the polycarbonate polyol, making it difficult to obtain an aqueous polyurethane resin dispersion having high storage stability. Further, the aqueous polyurethane resin dispersion has a problem in that a film obtained after drying the dispersion has poor flexibility. For this reason, when used for various coatings and bonding agents, for example, a coating composition on metal, an overcoat agent on various plastics (films), a coating composition on woodworking, and a printing ink, the aqueous dispersion cannot exhibit satisfactory "urethane-like flexibility".

The polyether polyurethane resin described in patent document 2 exhibits flexibility by virtue of the polyether chain which is a soft segment and has a problem of poor light resistance which is characteristic of the polyether. To solve the problem, an attempt has been made to produce an aqueous polyurethane resin dispersion using polycarbonate polyol instead of the polyether polyol which is a raw material for the polyether polyurethane resin. However, it has been found that the obtained aqueous polyurethane resin dispersion has a problem in that the flexibility is unsatisfactory (or the elastic modulus is high).

The aqueous polyether polyurethane resin described in patent document 3 has a problem of poor light resistance which is characteristic of the polyether. To solve the problem, an attempt has been made to produce an aqueous polyurethane resin dispersion using polycarbonate polyol instead of the polyether polyol which is a raw material for the aqueous polyether polyurethane resin. However, it has been found that the obtained aqueous polyurethane resin dispersion has problems in that the storage stability is poor, and in that the resultant aqueous polyurethane resin has an unsatisfactory molecular weight, so that a polyurethane film having a satisfactory strength cannot be obtained.

A task of the present invention is to obtain an aqueous polyurethane resin dispersion which is advantageous not only in that the dispersion exhibits excellent storage stability in an aqueous medium, but also in that when the dispersion is applied onto a substrate and dried, a polyurethane film having a low elastic modulus can be obtained.

Means to Solve the Problems

The present inventors have made various studies with a view toward solving the above-mentioned problems and providing an aqueous polyurethane resin dispersion which is advantageous not only in that the dispersion exhibits excellent storage stability in an aqueous medium, but also in that after the dispersion is dried, a film having satisfactory flexibility is formed. As a result, it has been found that an aqueous polyurethane resin dispersion comprising a polyurethane resin dispersed in an aqueous medium is effective, wherein the polyurethane resin is obtained by reacting (A) a polyurethane prepolymer with (B) a chain extender, wherein the polyurethane prepolymer (A) is obtained by reacting (a) a polycarbonate polyol compound, (b) a polyisocyanate compound, (c) an acid group-containing polyol compound, and (d) a compound having one acid group and one hydroxyl group, wherein the chain extender (B) contains (B-1) a polyamine compound having three or more amino group(s) and/or imino group(s) in total, and the present invention has been completed.

Specifically, the present invention is as follows.

[1] An aqueous polyurethane resin dispersion comprising a polyurethane resin dispersed in an aqueous medium, wherein the polyurethane resin is obtained by reacting (A) a polyurethane prepolymer with (B) a chain extender, wherein the polyurethane prepolymer (A) is obtained by reacting at least (a) a polycarbonate polyol compound, (b) a polyisocyanate compound, (c) an acid group-containing polyol compound, and (d) a compound having one acid group and one hydroxyl group,
wherein the chain extender (B) contains (B-1) a polyamine compound having three or more amino group(s) and/or imino group(s) in total.
[2] The aqueous polyurethane resin dispersion according to item [1] above, wherein the crosslinking density of the polyurethane resin is $0.2 \times 10^{-4}$ to $10 \times 10^{-4}$ mol/g.
[3] The aqueous polyurethane resin dispersion according to item [1] or [2] above, wherein the concentration of an end acid group derived from the compound (d) having one acid group and one hydroxyl group in the polyurethane resin is $1.5 \times 10^{-4}$ to $10 \times 10^{-4}$ mol/g.
[4] The aqueous polyurethane resin dispersion according to any one of items [1] to [3] above, wherein the polyurethane prepolymer (A) is obtained by optionally further reacting (d-2) a chain terminating agent, wherein the concentration of an end group derived from the compound (d) having one acid group and one hydroxyl group and the optionally used chain terminating agent (d-2) in the polyurethane resin is $3.0 \times 10^{-4}$ to $10 \times 10^{-4}$ mol/g.
[5] The aqueous polyurethane resin dispersion according to any one of items [1] to [4] above, wherein the compound (d) having one acid group and one hydroxyl group is a hydroxycarboxylic acid having 6 or more carbon atoms.
[6] The aqueous polyurethane resin dispersion according to any one of items [1] to [5] above, wherein the polyurethane prepolymer (A) has an acid value of 10 to 22 mg KOH/g.
[7] The aqueous polyurethane resin dispersion according to any one of items [1] to [6] above, wherein the polyurethane prepolymer (A) has an acid value of 14 to 19 mg KOH/g.
[8] A paint composition comprising the aqueous polyurethane resin dispersion according to any one of items [1] to [7] above.
[9] A coating composition comprising the aqueous polyurethane resin dispersion according to any one of items [1] to [7] above.
[10] A polyurethane film which is produced from the aqueous polyurethane resin dispersion according to any one of items [1] to [7] above.

Effect of the Invention

The aqueous polyurethane resin dispersion of the present invention is advantageous not only in that the dispersion exhibits excellent storage stability of polyurethane in water, but also in that when the dispersion is applied onto a substrate and dried, a polyurethane film having a low elastic modulus can be obtained.

BEST MODE FOR CARRYING OUT THE INVENTION

((a) Polycarbonate polyol compound)

Polycarbonate polyol compound (a) used in the present invention (hereinafter, frequently referred to as "(a)" or "polycarbonate polyol") is obtained by connecting bonding between polyols with carbonate bond, and may contain, for example, an ester linkage or an ether linkage.

With respect to the number average molecular weight of the polycarbonate polyol, there is no particular limitation, but the number average molecular weight is preferably 400 to 8,000. When the number average molecular weight of the polycarbonate polyol is 400 or more, the polycarbonate polyol exhibits excellent performance as a soft segment such that a coating film formed using the resultant aqueous polyurethane resin dispersion has an appropriately lowered elastic modulus. When the number average molecular weight is 8,000 or less, the reactivity of polycarbonate polyol compound (a) with isocyanate compound (b) is improved so that the reaction satisfactorily proceeds without requiring a prolonged period of time for the production process for the urethane prepolymer. As a result, polycarbonate polyol compound (a) is not increased in viscosity and is handled with ease, improving the aqueous polyurethane resin dispersion in the storage stability. The number average molecular weight of polycarbonate polyol compound (a) is more preferably 400 to 6,000, more preferably 800 to 4,500, further preferably 1,500 to 3,500. Polycarbonate diol having two hydroxyl groups per molecule is preferred.

In the present invention, the number average molecular weight (Mn) of the polycarbonate polyol is determined from a hydroxyl value using the following formula.

$$Mn = (56,100 \times Valence)/Hydroxyl\ value$$

In the above formula, the valence is the number of hydroxyl group(s) per molecule, and the hydroxyl value is measured in accordance with JIS K 1557 B. When the polycarbonate polyol is polycarbonate diol, the valence is 2.

Polycarbonate polyol compound (a) is obtained by reacting at least one polyol with a carbonate compound and/or phosgene. From the viewpoint of the production with ease and no generation of by-production with a terminal chloride, a polycarbonate polyol obtained by reacting at least one polyol with a carbonate compound is preferred.

With respect to examples of the polyols, there is no particular limitation, but examples include aliphatic polyols, polyols having an alicyclic structure, aromatic polyols, polyester polyols, and polyether polyols.

With respect to examples of the aliphatic polyols, there is no particular limitation, but examples include linear aliphatic diols, such as 1,3-propanediol, 1,4-butanediol, 1,5-pentanediol, 1,6-hexanediol, 1,7-heptanediol, 1,8-octanediol, and 1,9-nonanediol; branched aliphatic diols, such as 2-methyl-1,3-propanediol, 2-methyl-1,5-pentanediol, 3-methyl-1,5-pentanediol, and 2-methyl-1,9-nonanediol; and trifunctional or polyhydric alcohols, such as 1,1,1-trimethylolpropane and pentaerythritol.

With respect to examples of the polyols having an alicyclic structure, there is no particular limitation, but examples include diols having an alicyclic structure in the principal chain thereof, such as 1,4-cyclohexanedimethanol, 1,3-cyclohexanedimethanol, 1,4-cyclohexanediol, 1,3-cyclopentanediol, 1,4-cycloheptanediol, 2,5-bis(hydroxymethyl)-1,4-dioxane, 2,7-norbornanediol, tetrahydrofurandimethanol, and 1,4-bis(hydroxyethoxy)cyclohexane.

With respect to examples of the aromatic polyols, there is no particular limitation, but examples include 1,4-benzenedimethanol, 1,3-benzenedimethanol, 1,2-benzenedimethanol, 4,4'-naphthalenedimethanol, and 3,4'-naphthalenedimethanol.

With respect to examples of the polyester polyols, there is no particular limitation, but examples include a polyester polyol of a hydroxycarboxylic acid and a diol, such as a polyester polyol of 6-hydroxycaproic acid and hexanediol; and a polyester polyol of a dicarboxylic acid and a diol, such as a polyester polyol of adipic acid and hexanediol.

With respect to examples of the polyether polyols, there is no particular limitation, but examples include polyalkylene glycols, such as polyethylene glycol, polypropylene glycol, and polytetramethylene glycol.

The polyol is preferably a diol having two hydroxyl groups per molecule. Of the diols, from the viewpoint of obtaining a polyurethane film having a lowered elastic modulus, an aliphatic diol is preferred, specifically, 1,6-hexanediol, or a combination of 1,6-hexanediol and a diol selected from 1,3-propanediol, 1,4-butanediol, 1,5-pentanediol, 1,7-heptanediol, 1,8-octanediol, and 1,9-nonanediol is more preferred.

With respect to examples of the carbonate compounds, there is no particular limitation, but examples include aliphatic carbonate compounds, such as dimethyl carbonate and diethyl carbonate, aromatic carbonate compounds, such as diphenyl carbonate, and cyclic carbonate compounds, such as ethylene carbonate. In addition, for example, phosgene which can be utilized to form a polycarbonate polyol can be used. Of these, from the viewpoint of producing the polycarbonate polyol with ease, an aliphatic carbonate compound is preferred, and dimethyl carbonate is more preferred.

With respect to the method for producing the polycarbonate polyol from the polyol and carbonate compound, there is no particular limitation, but, for example, there can be mentioned a method in which a carbonate compound and a polyol are placed in a reactor and reacted with each other at a temperature of 160 to 200°C under atmospheric pressure for 15 to 25 hours, and then further reacted under a pressure of about 30 mmHg at 200 to 220°C for 10 to 20 hours. The above reaction is preferably conducted while removing the by-produced alcohol from the reaction system. In this case, when the carbonate compound and the by-produced alcohol together form an azeotrope so that the carbonate compound is removed from the reaction system, an excess of the carbonate compound may be added. Further, in the above reaction, a catalyst, such as titanium tetrabutoxide, may be used.

((a-2) Additional polyol)

When obtaining the aqueous polyurethane resin dispersion of the present invention, a polyol other than the above-mentioned polycarbonate polyol compound (a) and acid group-containing polyol compound (c) (hereinafter, frequently referred to as "additional polyol (a-2)") can be reacted.

As additional polyol (a-2), for example, a high molecular-weight diol or a low molecular-weight diol can be used. Of these, from the viewpoint of lowering the elastic modulus of a polyurethane film obtained using the aqueous polyurethane resin dispersion of the present invention, a high molecular-weight diol is preferred.

With respect to the high molecular-weight diol, there is no particular limitation, but, for example, a polycarbonate diol having a number average molecular weight of more than 8,000, a polyester diol or a polyether diol having a number average molecular weight of 400 to 4,000 can be used. With respect to examples of the polycarbonate diols having a number average molecular weight of more than 8,000, there is no particular limitation, but specific examples include aliphatic polycarbonate diols, such as polytetramethylene carbonate diol, polypentamethylene carbonate diol, and polyhexamethylene carbonate diol; aromatic polycarbonate diols, such as poly-1,4-xylylene carbonate diol; and copolymer polycarbonate diols, such as a polycarbonate diol which is a reaction product of various types of aliphatic diols and a carbonate compound, a polycarbonate diol which is a reaction product of an aliphatic diol, an aromatic diol and a carbonate compound, and a polycarbonate diol which is a reaction product of an aliphatic diol, a dimer diol, and a carbonate compound. Examples of the aliphatic diols include 1,4-butanediol, 1,5-pentanediol, 1,6-hexanediol, and 3-methyl-1,5-pentanediol. Examples of the aromatic diols include 1,4-benzenedimethanol, 1,3-benzenedimethanol, and 1,4-dihydroxybenzene. With respect to examples of the polyester diols, there is no particular limitation, but specific examples include polyethylene adipate diol, polybutylene adipate diol, polyethylene butylene adipate diol, polyhexamethylene isophthalate adipate diol, polyethylene succinate diol, polybutylene succinate diol, polyethylene sebacate diol, polybutylene sebacate diol, poly-$\varepsilon$-caprolactonediol, poly(3-methyl-1,5-pentylene adipate) diol, and a polycondensation product of 1,6-hexanediol and a dimer acid. With respect to examples of the polyether diols, there is no particular limitation, but specific examples include polyethylene glycol, polypropylene glycol, polytetramethylene glycol, and random copolymers or block copolymers of ethylene oxide and propylene oxide, or ethylene oxide and butylene oxide. Further, for example, polyether polyester polyol having an ether linkage and an ester linkage may be used.

With respect to the low molecular-weight diol, there is no particular limitation, but examples include diols having a number average molecular weight of 60 to less than 400, for example, aliphatic diols having 2 to 9 carbon atoms, such as ethylene glycol, 1,3-propanediol, 2-methyl-1,3-propanediol, 2,2-dimethyl-1,3-propanediol, 2-butyl-2-ethyl-1,3-propanediol, 1,4-butanediol, 1,5-pentanediol, 3-methyl-1,5-pentanediol, 1,6-hexanediol, 1,9-nonanediol, 2-methyl-1,8-octanediol, diethylene glycol, triethylene glycol, and tetraethylene glycol; and diols having an alicyclic structure having 6 to 12 carbon atoms, such as 1,4-cyclohexanedimethanol, 1,3-cyclohexanedimethanol, 1,4-cyclohexanediol, 1,4-bis(hydroxyethyl)cyclohexane, 2,7-norbornanediol, tetrahydrofurandimethanol, and 2,5-bis(hydroxymethyl)-1,4-dioxane. Further, like the above-mentioned low molecular-weight diol, a low molecular-weight polyhydric alcohol, such as trimethylolpropane, pentaerythritol, or sorbitol, may be used.

A single type of additional polyol (a-2) may be used, or two or more types of additional polyols (a-2) may be used in combination.

((b) Polyisocyanate compound)

With respect to polyisocyanate compound (b) (hereinafter, frequently referred to as "(b)" or "polyisocyanate") which can be used in the present invention, there is no particular limitation, but examples include aromatic polyisocyanate compounds, aliphatic polyisocyanate compounds, and alicyclic polyisocyanate compounds.

Specific examples of aromatic polyisocyanate compounds include 1,3-phenylene diisocyanate, 1,4-phenylene diisocyanate, 2,4-tolylene diisocyanate (TDI), 2,6-tolylene diisocyanate, 4,4'-diphenylmethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonyl isocyanate, and p-isocyanatophenylsulfonyl isocyanate.

Specific examples of aliphatic polyisocyanate compounds include ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate.

Specific examples of alicyclic polyisocyanate compounds include isophorone diisocyanate (IPDI), 4,4'-dicyclohexylmethane diisocyanate (H12-MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, and 2,6-norbornane diisocyanate.

These polyisocyanate compounds may be used individually or in combination. The polyisocyanate compound is preferably a diisocyanate compound having two isocyanate groups per molecule, and a polyisocyanate having three or more isocyanate groups, such as triphenylmethane triisocyanate, can also be used in such an amount that the polyurethane resin in the present invention suffers no gelation.

Among the above polyisocyanate compounds, from the viewpoint of obtaining the aqueous polyurethane resin dispersion having high storage stability, an alicyclic polyisocyanate compound having an alicyclic structure is preferred, and, from the viewpoint of facilitating control of the reaction and obtaining the coating film having high weathering resistance and high light resistance, isophorone diisocyanate (IPDI) or 4,4'-dicyclohexylmethane diisocyanate (H12-MDI) is more preferred, and, from the viewpoint of obtaining the polyurethane film having a lowered elastic modulus, isophorone diisocyanate (IPDI) is further preferred.

((c) Acid group-containing polyol compound)

The above-mentioned acid group-containing polyol compound (c) (hereinafter, frequently referred to as "(c)") contains in the molecule thereof two or more hydroxyl groups and at least one acid group. Examples of acid groups include a carboxyl group, a sulfonic acid group, a phosphoric acid group, and a phenolic hydroxyl group. Particularly, an acid group-containing polyol compound (c), preferred is one containing a compound having two hydroxyl groups and one carboxyl group. A single type of acid group-containing polyol compound (c) may be used, or two or more types of acid group-containing polyol compounds (c) may be used in combination.

Specific examples of acid group-containing polyol compounds (c) include dimethylolalkanoic acids, such as 2,2-dimethylolpropionic acid (DMPA) and 2,2-dimethylolbutanoic acid; N,N-bishydroxyethylglycine, N,N-bishydroxyethylalanine, 3,4-dihydroxybutanesulfonic acid, and 3,6-dihydroxy-2-toluenesulfonic acid. Of these, from the viewpoint of easy availability, alkanoic acids containing two methylol groups and having 4 to 12 carbon atoms (dimethylolalkanoic acids) are preferred, and, among the dimethylolalkanoic acids, 2,2-dimethylolpropionic acid is more preferred.

In the present invention, the total hydroxyl equivalent of polycarbonate polyol compound (a) and acid group-containing polyol compound (c) is preferably 150 to 2,500. When the above total hydroxyl equivalent is 150 or more, the aqueous polyurethane resin dispersion can be produced with ease, and a film obtained after drying the dispersion has improved flexibility. When the total hydroxyl equivalent is 2,500 or less, the obtained aqueous polyurethane resin dispersion has improved storage stability.

From the viewpoint of the storage stability of the obtained aqueous polyurethane resin dispersion and the flexibility of a film obtained after drying the dispersion, the total hydroxyl equivalent is more preferably 200 to 2,000, further preferably 400 to 1,500, further preferably 600 to 1,000.

The total hydroxyl equivalent of polycarbonate polyol compound (a) and acid group-containing polyol compound (c) can be determined by making a calculation using the following formulae (1) and (2).

$$\text{Hydroxyl equivalent of each polyol}$$
$$= \text{Molecular weight of each polyol/Number of hydroxyl groups of each polyol} \tag{1}$$

$$\text{Total hydroxyl equivalent of polycarbonate polyol compound (a) and acid}$$
$$\text{group-containing polyol compound (c)}$$
$$= M/\text{Total mole of polyols} \tag{2}$$

In the formula (2) above, M represents {[Hydroxyl equivalent of polycarbonate polyol compound (a) calculated by formula (1) × Mole of polycarbonate polyol compound (a)] + [Hydroxyl equivalent of acid group-containing polyol compound (c) calculated by formula (1) × Mole of acid group-containing polyol compound (c)]}.

((d) Compound having one acid group and one hydroxyl group)

With respect to compound (d) having one acid group and one hydroxyl group which can be used in the present invention, there is no particular limitation, but examples include compounds having one acid group, such as a carboxyl group, a sulfonic acid group, a phosphoric acid group, or a phenolic hydroxyl group, and one hydroxyl group.

Specific examples of compounds (d) having one acid group and one hydroxyl group include glycolic acid (2-hydroxyacetic acid), hydroxypivalic acid (HPA), lactic acid, 3-hydroxybutyric acid, 4-hydroxybutyric acid, 10-hydroxydecanoic acid, hydroxypivalic acid (2,2-dimethyl-3-hydroxypropionic acid), 12-hydroxydodecanoic acid, 16-hydroxyhexadecanoic acid, lactic acid, trichlorolactic acid, salicylic acid, hydroxybenzoic acid, 1-hydroxy-2-naphthoic acid, 3-hydroxypropionic acid, 2-hydroxyoctanoic acid, 3-hydroxyundecanoic acid, 12-hydroxystearic acid (12-HSA), and 12-hydroxyoleic acid. Of these, preferred examples are glycolic acid, 4-hydroxybutyric acid, hydroxypivalic acid, and hydroxycarboxylic acids having 6 or more carbon atoms, such as 2-hydroxyoctanoic acid, 10-hydroxydecanoic acid, 3-hydroxyundecanoic acid, 12-hydroxystearic acid, and 12-hydroxyoleic acid, and, of these, from the viewpoint of obtaining a polyurethane film having a lowered elastic modulus, 12-hydroxystearic acid is especially preferred.

These compounds (d) having one acid group and one hydroxyl group may be used individually or in combination.

When a compound having two or more acid groups and one hydroxyl group is used, the obtained aqueous polyurethane resin dispersion may become poor in the storage stability.

In the present invention, (d-2) a chain terminating agent can be optionally used. Chain terminating agent (d-2) is a compound except compound (d) having one acid group and one hydroxyl group, and effectively terminates the urethane-forming reaction or chain extension reaction at the end of the polyurethane resin and includes a compound having one functional group in total, which has reactivity with an isocyanate group, such as a hydroxyl group, an amino group, an imino group, or a mercapto group. Specific examples include monoamines, such as n-butylamine and di-n-butylamine; and monohydric alcohols, such as ethanol, isopropanol, and butanol, and these chain terminating agents (d-2) are used individually or in combination. Further, the chain terminating agent may be used together with the above-mentioned compound (d) having one acid group and one hydroxyl group.

It is preferred that the amount of compound (d) having one acid group and one hydroxyl group and optionally used chain terminating agent (d-2) is appropriately controlled so that the concentration of an end group derived from compound (d) having one acid group and one hydroxyl group and chain terminating agent (d-2) in the urethane resin becomes $1.5 \times 10^{-4}$ to $20 \times 10^{-4}$ mol/g. When the above concentration of an end group is $20 \times 10^{-4}$ mol/g or less, the film formation properties are excellent upon drying the aqueous polyurethane resin dispersion, so that a polyurethane film having a satisfactory strength can be obtained. When the concentration of an end group is $1.5 \times 10^{-4}$ mol/g or more, the obtained polyurethane film has an appropriately lowered elastic modulus. The concentration of an end group is more preferably $2.0 \times 10^{-4}$ to $15 \times 10^{-4}$ mol/g, further preferably $3.0 \times 10^{-4}$ to $10 \times 10^{-4}$ mol/g.

The concentration of an end group derived from compound (d) having one acid group and one hydroxyl group and optionally used chain terminating agent (d-2) in the urethane resin can be determined from the following formula.

$$\text{(End group concentration (mol/g))} = [\text{(Mole of compound (d) having one acid group and one hydroxyl group)} + \text{(Mole of chain terminating agent (d-2))}]/\text{(Urethane resin solids weight (g))}$$

It is preferred that compound (d) is used so that the concentration of an end acid group derived from compound (d) having one acid group and one hydroxyl group becomes $0.3 \times 10^{-4}$ to $20 \times 10^{-4}$ mol/g. When the above end acid group concentration is $20 \times 10^{-4}$ mol/g or less, a film can be appropriately formed by drying the aqueous polyurethane resin dispersion. When the end acid group concentration is $0.3 \times 10^{-4}$ mol/g or more, the obtained film has high flexibility. The end acid group concentration is more preferably $0.5 \times 10^{-4}$ to $15 \times 10^{-4}$ mol/g, further preferably $1.5 \times 10^{-4}$ to $10 \times 10^{-4}$ mol/g.

The concentration of an end acid group derived from compound (d) having one acid group and one hydroxyl group in the urethane resin can be determined from the following formula.

$$\text{(Concentration of an end acid group derived from compound (d) having one acid group and one hydroxyl group (mol/g))} = \text{(Mole of compound (d) having one acid group and one hydroxyl group)}/\text{(Urethane resin solids weight (g))}$$

(Chain extender (B))

It is necessary that chain extender (B) in the present invention contain at least one (B-1) polyamine compound having in the molecule thereof three or more amino group(s) and/or imino group(s) in total. The crosslinking density of the polyurethane resin is preferably $0.2 \times 10^{-4}$ to $10 \times 10^{-4}$ mol/g. Chain extender (B) may contain, as an arbitrary component, (B-2) an additional chain extender other than polyamine compound (B-1) having three or more amino group(s) and/or imino group(s) in total, but, in such a case, additional chain extender (B-2) is required to be contained so that the crosslinking density of the polyurethane resin falls within the range of from $0.2 \times 10^{-4}$ to $10 \times 10^{-4}$ mol/g. When the crosslinking density is $0.5 \times 10^{-4}$ mol/g or more, the aqueous polyurethane resin dispersion has improved storage stability, and further it becomes easy to obtain a film by drying the aqueous polyurethane resin dispersion. When the crosslinking density is $10 \times 10^{-4}$ mol/g or less, a coating film having high flexibility can be obtained.

The crosslinking density of the urethane resin can be determined from the following formula.

$$
\begin{aligned}
&\text{(Crosslinking density of urethane resin (mol/g))} \\
&= \{\text{(Mole of polyamine compound (B-1) having three or more amino group(s)} \\
&\text{and/or imino group(s) in total)} \times [\text{(Number of amino group(s) and/or imino group(s) per} \\
&\text{molecule) - 2}]\}/\text{(Urethane resin solids weight (g))}
\end{aligned}
$$

The proportion of polyamine compound (B-1) having in the molecule thereof three or more amino group(s) and/or imino group(s) in total in chain extender (B) is preferably 10 to 100 mol%, more preferably 20 to 100 mol%, further preferably 40 to 100 mol%.

With respect to examples of polyamine compounds (B-1) having three or more amino group(s) and/or imino group(s) in total, there is no particular limitation, but examples include triamine compounds, such as diethylenetriamine (DETA), bis(2-aminopropyl)amine, and bis(3-aminopropyl)amine; tetramine compounds, such as triethylenetetramine, tripropylenetetramine, N-(benzyl)triethylenetetramine, N,N'''-(dibenzyl)triethylenetetramine, and N-(benzyl)-N'''-(2-ethylhexyl)triethylenetetramine; pentamine compounds, such as tetraethylenepentamine and tetrapropylenepentamine; hexamine compounds, such as pentaethylenehexamine and pentapropylenehexamine; and polyamines, such as polyethyleneimine and polypropyleneimine.

Of these, from the viewpoint of the reactivity with the polyurethane prepolymer, polyamines having two amino groups and at least one imono group or a mixture thereof, such as diethylenetriamine, triethylenetetramine, bis(2-aminopropyl)amine, bis(3-aminopropyl)amine, tripropylenetetramine, tetraethylenepentamine, tetrapropylenepentamine, pentaethylenehexamine, and pentapropylenehexamine are preferred.

With respect to examples of additional chain extenders (B-2) except polyamine compound (B-1) having three or more amino group(s) and/or imino group(s) in total, there is no particular limitation, but examples include diamine compounds, such as hydrazine, ethylenediamine, 1,4-tetramethylenediamine, 2-methyl-1,5-pentanediamine, 1,6-hexamethylenediamine, 1,4-hexamethylenediamine, 3-aminomethyl-3,5,5-trimethylcyclohexylamine, 1,3-bis(aminomethyl)cyclohexane, xylylenediamine, piperazine, and 2,5-dimethylpiperazine; polyol compounds, such as 1,4-butanediol and 1,6-hexanediol; and water, and, of these, preferred examples include primary diamine compounds. These may be used individually or in combination.

The amount of added chain extender (B) is preferably the equivalent or less of the residual isocyanate groups, which serve as a starting point of chain extension in urethane prepolymer (A), more preferably 0.7 to 0.99 equivalent of the residual isocyanate groups. When the chain extender is added in an amount larger than the equivalent of the residual isocyanate groups, the chain-extended urethane polymer may have a lowered molecular weight, so that strength of a coating film formed with the obtained aqueous polyurethane resin dispersion is reduced.

(Polyurethane prepolymer (A))

Polyurethane prepolymer (A) which can be used in the present invention is obtained by reacting at least the above-mentioned polycarbonate polyol compound (a), polyisocyanate compound (b), acid group-containing polyol compound (c), and compound (d) having one acid group and one hydroxyl group. Polyurethane prepolymer (A) may contain additional polyol (a-2) and/or chain terminating agent (d-2).

In obtaining polyurethane prepolymer (A), when the total amount of polycarbonate polyol compound (a), polyisocyanate compound (b), acid group-containing polyol compound (c), compound (d) having one acid group and one hydroxyl group, and chain extender (B), and optionally chain terminating agent (d-2) and additional polyol (a-2) is 100 parts by weight, the amount of polycarbonate polyol compound (a) is preferably 40 to 90 parts by weight, more preferably 50 to 85 parts by weight, further preferably 60 to 80 parts by weight. The amount of acid group-containing polyol compound (c) is preferably 0.5 to 10 parts by weight, more preferably 1 to 5 parts by weight. The amount of additional polyol (a-2) is preferably 0 to 20 parts by weight, more preferably 0 to 10 parts by weight, further preferably 0 to 5 parts by weight.

When the amount of polycarbonate polyol compound (a) is 40 parts by weight or more, the obtained polyurethane film has an appropriately lowered elastic modulus, and, when the amount of polycarbonate polyol compound (a) is 90 parts by weight or less, the aqueous polyurethane resin dispersion has improved storage stability.

When the amount of acid group-containing polyol compound (c) is 0.5 part by weight or more, the obtained aqueous polyurethane resin has excellent dispersibility in an aqueous medium, and, when the amount of acid group-containing polyol compound (c) is 10 parts by weight or less, a coating film obtained by applying the obtained aqueous polyurethane resin dispersion has excellent water resistance, and further the obtained film has improved flexibility.

When the amount of additional polyol (a-2) is too large, the obtained polyurethane resin film may become poor in weathering resistance, light resistance, hydrolytic resistance, or chemical resistance.

In obtaining polyurethane prepolymer (A), the ratio of the mole of isocyanate groups of polyisocyanate compound (b) to the total mole of hydroxyl groups of the all polyol components comprising polycarbonate polyol compound (a), acid group-containing polyol compound (c), compound (d) having one acid group and one hydroxyl group, and optionally additional polyol (a-2) is preferably 1.05 to 2.5. When the ratio of the mole of isocyanate groups of polyisocyanate compound (b) to the total mole of hydroxyl groups of the all polyol components is 2.5 or less, polyurethane prepolymer (A) having no isocyanate group at the molecular end thereof is reduced, namely, the molecules which are not reacted with chain extender (B) are reduced, so that a film can be appropriately obtained after drying the aqueous polyurethane resin dispersion of the present invention. On the other hand, when the ratio of the mole of isocyanate groups of polyisocyanate compound (b) to the total mole of hydroxyl groups of the all polyol components is 1.05 or more, it is unlikely that the unreacted polyisocyanate compound (b) in a large amount remains in the reaction system, and hence it is unlikely that such an unreacted compound is reacted with chain extender (B) or water to cause chain extension of the molecules, so that the aqueous polyurethane resin dispersion of the present invention can be produced with ease and improved the storage stability. Further, the obtained polyurethane film has an appropriately lowered elastic modulus. The ratio of the mole of isocyanate groups of polyisocyanate compound (b) to the total mole of hydroxyl groups of the all polyol components is more preferably 1.1 to 1.8, further preferably 1.2 to 1.6.

When polycarbonate polyol compound (a), acid group-containing polyol compound (c), polyisocyanate compound (b), and compound (d) having one acid group and one hydroxyl group are reacted with each other to obtain polyurethane prepolymer (A), (a), (c), and (d) may be reacted with (b) in any order.

In the reaction for obtaining polyurethane prepolymer (A), a catalyst can be used.

With respect to examples of the catalysts, there is no particular limitation, but examples include salts of a metal and an organic or inorganic acid, and organometal derivatives, e.g., tin catalysts (such as trimethyltin laurate and dibutyltin dilaurate) and lead catalysts (such as lead octylate), amine catalysts (such as triethylamine, N-ethylmorpholine, and triethylenediamine), and diazabicycloundecene catalysts. Of these, from the viewpoint of the reactivity, dibutyltin dilaurate is preferred.

With respect to the reaction temperature for the reaction of the polyol components with the polyisocyanate, there is no particular limitation, but the reaction temperature is preferably 40 to 150°C. When the reaction temperature is too low, it is likely that the raw materials are not dissolved, so that the viscosity of the obtained polyurethane prepolymer (A) is too high to stir the prepolymer satisfactorily. When the reaction temperature is too high, for example, a problem of a side reaction may occur. The reaction temperature is further preferably 60 to 120°C.

The reaction of polycarbonate polyols compound (a), acid group-containing polyol compound (c), polyisocyanate compound (b), and compound (d) having one acid group and one hydroxyl group may be conducted either without a solvent or in an organic solvent added. Examples of organic solvents include acetone, methyl ethyl ketone, methyl isobutyl ketone, tetrahydrofuran, dioxane, dimethylformamide, dimethyl sulfoxide, N-methylpyrrolidone, N-ethylpyrrolidone, and ethyl acetate. Of these, acetone, methyl ethyl ketone, and ethyl acetate are preferred because they can be removed by heating under a reduced pressure after dispersing the polyurethane prepolymer in water and performing the chain extension reaction. Further, N-methylpyrrolidone and N-ethylpyrrolidone are preferred because they serve as a film-forming aid in forming a coating film from the obtained aqueous polyurethane resin dispersion. The amount of the added organic solvent, in terms of a weight, is preferably 0.1 to 2.0 times, more preferably 0.15 to 0.8 time as large as the total weight of polycarbonate polyol compound (a), acid group-containing polyol compound (c), polyisocyanate compound (b), and compound (d) having one acid group and one hydroxyl group.

In the present invention, polyurethane prepolymer (A) preferably has an acid value (AV) of 8 to 30 mg KOH/g, more preferably 10 to 22 mg KOH/g, further preferably 14 to 19 mg KOH/g. When the acid value of polyurethane prepolymer (A) is 8 mg KOH/g or more, the dispersibility in an aqueous medium is excellent. On the other hand, when the acid value of polyurethane prepolymer (A) is 30 mg KOH/g or less, the obtained polyurethane resin coating film has improved water resistance, and further the obtained film has improved flexibility.

In the present invention, the term "acid value of polyurethane prepolymer (A)" means an acid value of so-called solids of the polyurethane prepolymer, which are obtained by removing the solvent used in producing polyurethane prepolymer (A) and the neutralizing agent used for dispersing polyurethane prepolymer (A) in the aqueous medium.

Specifically, the acid value of polyurethane prepolymer (A) can be introduced by the following formula (3).

[Acid value of polyurethane prepolymer (A) (mg KOH/g)]

= [(Millimole of acid group-containing polyol compound (b)) + (Millimole of compound (d) having one acid group and one hydroxyl group)] × 56.11/[Total weight of polycarbonate polyol compound (a), acid group-containing polyol compound (c), polyisocyanate compound (b), and compound (d) having one acid group and one hydroxyl group]          (3)

(Polyurethane resin)

In the present invention, the polyurethane resin may be obtained by a one-shot process in which polycarbonate polyol compound (a), acid group-containing polyol compound (c), polyisocyanate compound (b), compound (d) having one acid group and one hydroxyl group, and chain extender (B) are reacted at the same time. Alternative, the polyurethane resin may be obtained by a prepolymer method in which polycarbonate polyol compound (a), acid group-containing polyol compound (c), polyisocyanate compound (b), and compound (d) having one acid group and one hydroxyl group are reacted to prepare polyurethane prepolymer (A), and the prepared polyurethane prepolymer (A) and chain extender (B) are reacted with each other.

When polyurethane prepolymer (A) and chain extender (B) are reacted with each other to obtain a polyurethane resin, the temperature for the reaction of polyurethane prepolymer (A) and chain extender (B) is, for example, 0 to 80°C, preferably 0 to 60°C.

(Aqueous medium)

In the present invention, the polyurethane resin is dispersed in an aqueous medium. Examples of the aqueous media include water, and a mixed medium of water and a hydrophilic organic solvent.

As examples of the water, there can be mentioned tap water, ion-exchanged water, distilled water, and ultrapure water. Of these, taking into consideration, for example, easy availability and unstable particles caused due to the influence of salts, ion-exchanged water is preferably used.

Examples of the hydrophilic organic solvents include lower monohydric alcohols, such as methanol, ethanol, and propanol; polyhydric alcohols, such as ethylene glycol and glycerol; and aprotic hydrophilic organic solvents, such as N-methylmorpholine, dimethyl sulfoxide, dimethylformamide, N-methylpyrrolidone, and N-ethylpyrrolidone.

The amount of the hydrophilic organic solvent in the aqueous medium is preferably 0 to 20% by weight.

(Aqueous polyurethane resin dispersion)

A method for producing the aqueous polyurethane resin dispersion is described below.

The method for producing the aqueous polyurethane resin dispersion of the present invention comprises a step (α) of reacting the above-mentioned polycarbonate polyol compound (a), acid group-containing polyol compound (c), polyisocyanate compound (b), and compound (d) having one acid group and one hydroxyl group to obtain polyurethane prepolymer (A), a step (β) of neutralizing the acid group of polyurethane prepolymer (A), a step (γ) of dispersing polyurethane prepolymer (A) in an aqueous medium, and a step (δ) of reacting polyurethane prepolymer (A) with chain extender (B) having reactivity with the isocyanate group of polyurethane prepolymer (A).

Step (α) for obtaining polyurethane prepolymer (A) may be performed either in an atmosphere of inert gas or in an atmosphere of air. Preferred conditions for step (α) are substantially the same as those for the above-mentioned method for obtaining polyurethane prepolymer (A), and the descriptions of the same conditions are omitted.

As examples of neutralizing agents which can be used in step (β) of neutralizing the acid group of polyurethane prepolymer (A), there can be mentioned organic amines, such as trimethylamine, triethylamine, triisopropylamine, tributylamine, triethanolamine, N-methyldiethanolamine, N-ethyldiethanolamine, N-phenyldiethanolamine, dimethylethanolamine, diethylethanolamine, N-methylmorpholine, and pyridine; inorganic alkali salts, such as sodium hydroxide and potassium hydroxide; and ammonia. Of these, organic amines can be preferably used, tertiary amines can be more preferably used, and triethylamine can be most preferably used.

The acid group of polyurethane prepolymer (A) means, for example, a carboxylic acid group, a sulfonic acid group, a phosphoric acid group, or a phenolic hydroxyl group.

In step (γ) of dispersing polyurethane prepolymer (A) in an aqueous medium, with respect to the method for dispersing the polyurethane prepolymer in an aqueous medium, there is no particular limitation, but, for example, there can be mentioned a method in which polyurethane prepolymer (A) is added to an aqueous medium being stirred by, e.g., a homomixer or a homogenizer, and a method in which an aqueous medium is added to polyurethane prepolymer (A) being stirred by, e.g., a homomixer or a homogenizer.

In step ($\delta$) of reacting polyurethane prepolymer (A) with chain extender (B) having reactivity with the isocyanate group of polyurethane prepolymer (A), step ($\delta$) may be performed slowly while cooling, or may be performed under heating conditions at 60°C or lower so as to promote the reaction. The reaction time for the reaction conducted while cooling is about 0.5 to 24 hours, and the reaction time for the reaction conducted under heating conditions at 60°C or lower is about 0.1 to 6 hours.

In the method in the present invention, step ($\beta$) of neutralizing the acid group of polyurethane prepolymer (A) and step ($\gamma$) of dispersing polyurethane prepolymer (A) in an aqueous medium may be performed in any order, and can be performed simultaneously.

Further, step ($\gamma$) of dispersing polyurethane prepolymer (A) in an aqueous medium and step ($\delta$) of reacting polyurethane prepolymer (A) with chain extender (B) may be performed simultaneously.

Furthermore, step ($\beta$) of neutralizing the acid group of polyurethane prepolymer (A), step ($\gamma$) of dispersing polyurethane prepolymer (A) in an aqueous medium, and step ($\delta$) of reacting polyurethane prepolymer (A) with chain extender (B) may be performed simultaneously.

The proportion of the polyurethane resin in the aqueous polyurethane resin dispersion is preferably 5 to 60% by weight, more preferably 15 to 50% by weight.

The aqueous polyurethane resin in the aqueous polyurethane resin dispersion of the present invention generally has a weight average molecular weight of about 25,000 to 10,000,000, more preferably 50,000 to 5,000,000, further preferably 100,000 to 1,000,000. The weight average molecular weight is measured by gel permeation chromatography (GPC), and a value determined by conversion from a calibration curve preliminarily prepared with the standard polystyrene can be used. When the weight average molecular weight is smaller than the above range, a film may not be obtained by drying the aqueous urethane resin dispersion. When the weight average molecular weight is larger than the above range, the aqueous urethane resin dispersion may become poor in the drying properties.

In the aqueous polyurethane resin dispersion of the present invention, if necessary, an additive, such as a thickener, a photosensitizer, a curing catalyst, an ultraviolet light absorber, a light stabilizer, an anti-foaming agent, a plasticizer, a surface conditioner, or an anti-settling agent, can be added. These additives may be used individually or in combination.

(Paint composition)

The paint composition of the present invention is a paint composition comprising the above-described aqueous polyurethane resin dispersion.

In the paint composition of the present invention, to the aqueous polyurethane resin dispersion, an additional resin can be added. Examples of the additional resins include a polyester resin, an acrylic resin, a polyether resin, a polycarbonate resin, a polyurethane resin, an epoxy resin, and an alkyd resin. These can be used individually or in combination.

Further, the additional resin preferably has at least one hydrophilic group. Examples of the hydrophilic groups include a hydroxyl group, a carboxyl group, a sulfonic acid group, and a polyethylene oxide group.

The additional resin is preferably at least one member selected from the group consisting of a polyester resin and an acrylic resin.

Further, when the polyester resin and the acrylic resin have hydroxyl groups, a so-called urethane-modified polyester resin or urethane-modified acrylic resin, which is obtained by urethane reaction of a part of or all of the hydroxyl groups in the resin with the polyisocyanate compound to extend the resin so as to increase the molecular weight, may be used.

The polyester resin can be generally produced by esterification or transesterification reaction of an acid component and an alcohol component.

As the acid component, a compound generally used as an acid component to produce a polyester resin can be used. As the acid component, for example, an aliphatic polybasic acid, an alicyclic polybasic acid, or an aromatic polybasic acid can be used.

The polyester resin preferably has a hydroxyl value of about 10 to 300 mg KOH/g, more preferably about 50 to 250 mg KOH/g, further preferably about 80 to 180 mg KOH/g. The polyester resin preferably has an acid value of about 1 to 200 mg KOH/g, more preferably about 15 to 100 mg KOH/g, further preferably about 25 to 60 mg KOH/g.

The polyester resin preferably has a weight average molecular weight of 500 to 50,000, more preferably 1,000 to 30,000, further preferably 1,500 to 20,000.

As the acrylic resin, a hydroxyl group-containing acrylic resin is preferred. The hydroxyl group-containing acrylic resin can be produced by copolymerizing a hydroxyl group-containing unsaturated monomer and another polymerizable unsaturated monomer by, for example, a known method, such as a solution polymerization method in an organic solvent or an emulsion polymerization method in water.

The hydroxyl group-containing polymerizable unsaturated monomer is a compound having at least one hydroxyl group and at least one polymerizable unsaturated bond in the molecule thereof. Examples of such compounds include monoester compounds of (meth)acrylic acid and a dihydric alcohol having 2 to 8 carbon atoms, such as 2-hydroxyethyl (meth)acrylate, 2-hydroxypropyl (meth)acrylate, 3-hydroxypropyl (meth)acrylate, and 4-hydroxybutyl (meth)acrylate; $\varepsilon$-caprolactone-modified products of the above monoester compounds; N-hydroxymethyl(meth)acrylamide; allyl alcohol; and (meth)acrylates having a polyoxyethylene chain with a hydroxyl group at the molecular end.

The hydroxyl group-containing acrylic resin preferably has a cationic functional group.

The hydroxyl group-containing acrylic resin having a cationic functional group can be produced with, for example, as the polymerizable unsaturated monomer, a polymerizable unsaturated monomer having a cationic functional group, such as a tertiary amino group or a quaternary ammonium base.

From the viewpoint of, for example, the storage stability and the water resistance of the obtained coating film, the hydroxyl group-containing acrylic resin preferably has a hydroxyl value of about 1 to 200 mg KOH/g, more preferably about 2 to 100 mg KOH/g, further preferably about 3 to 60 mg KOH/g.

Further, when the hydroxyl group-containing acrylic resin has an acid group, such as a carboxyl group, from the viewpoint of, for example, the water resistance of the obtained coating film, the hydroxyl group-containing acrylic resin preferably has an acid value of about 1 to 200 mg KOH/g, more preferably about 2 to 150 mg KOH/g, further preferably about 5 to 100 mg KOH/g.

The hydroxyl group-containing acrylic resin preferably has a weight average molecular weight in the range of from 1,000 to 200,000, more preferably from 2,000 to 100,000, further preferably from 3,000 to 50,000.

As the polyether resin, there can be mentioned a polymer or copolymer having an ether linkage, and examples include polyoxyethylene polyether, polyoxypropylene polyether, polyoxybutylene polyether, and polyether derived from an aromatic polyhydroxy compound, such as bisphenol A or bisphenol F.

As examples of the polycarbonate resins, there can be mentioned polymers produced from a bisphenol compound, for example, bisphenol A polycarbonate.

As examples of the polyurethane resins, there can be mentioned resins having an urethane bond obtained by a reaction of a polyol component, such as acryl, polyester, polyether, or polycarbonate, with a polyisocyanate compound.

As examples of the epoxy resins, there can be mentioned resins obtained by a reaction of a bisphenol compound and epichlorohydrin. Examples of bisphenols include bisphenol A and bisphenol F.

As examples of the alkyd resins, there can be mentioned alkyd resins obtained by reacting a polybasic acid, such as phthalic acid, terephthalic acid, or succinic acid, and a polyhydric alcohol with further a modifier, such as oil and fat, or a fatty acid (such as soybean oil, linseed oil, coconut oil, or stearic acid), or a natural resin (such as rosin or succinite).

By adding a curing agent to the paint composition of the present invention, a coating film or multilayer coating film using the paint composition can be improved in, for example, water resistance.

As the curing agent, for example, an amino resin, a polyisocyanate compound, a blocked polyisocyanate compound, a melamine resin, or a carbodiimide can be used. The curing agents may be used individually or in combination.

As the amino resin, for example, there can be mentioned a partial- or complete-methylol-amino resin obtained by a reaction of an amino component and an aldehyde component. Examples of the amino components include melamine, urea, benzoguanamine, acetoguanamine, steroguanamine, spiroguanamine, and dicyandiamide. Examples of the aldehyde components include formaldehyde, paraformaldehyde, acetaldehyde, and benzaldehyde.

As the polyisocyanate compound, for example, there can be mentioned a compound having two or more isocyanate groups in the molecule thereof, and examples include hexamethylene diisocyanate and trimethylhexamethylene diisocyanate.

As the blocked polyisocyanate compound, there can be mentioned one obtained by adding a blocking agent to a polyisocyanate group of the above-mentioned polyisocyanate compound. Examples of blocking agents include phenol blocking agents, such as phenol and cresol; and aliphatic alcohol blocking agents, such as methanol and ethanol.

Examples of the melamine resins include methylolmelamines, such as dimethylolmelamine and trimethylolmelamine; alkyl ether compounds or condensation products of the above methylolmelamines; and condensation products of the alkyl ether compounds of methylolmelamine.

In the paint composition of the present invention, a color pigment, a loading pigment, or a luster pigment can be added.

Examples of the color pigments include titanium oxide, zinc white, carbon black, molybdenum red, Prussian blue, cobalt blue, an azo pigment, a phthalocyanine pigment, a quinacridone pigment, an isoindoline pigment, a threne pigment, and a perylene pigment. These can be used individually or in combination. Particularly, as a color pigment, titanium oxide and/or carbon black is preferably used.

Examples of the loading pigments include clay, kaolin, barium sulfate, barium carbonate, calcium carbonate, talc, silica, and alumina white. These can be used individually or in combination. Particularly, as a loading pigment, barium sulfate and/or talc is preferably used, and barium sulfate is more preferably used.

As the luster pigment, for example, aluminum, copper, zinc, brass, nickel, aluminum oxide, mica, aluminum oxide coated with titanium oxide or iron oxide, or mica coated with titanium oxide or iron oxide can be used.

In the paint composition of the present invention, if necessary, a general paint additive, such as a thickener, a curing catalyst, an ultraviolet light absorber, a light stabilizer, an anti-foaming agent, a plasticizer, a surface conditioner, or an anti-settling agent, can be added individually or two or more of them in combination can be added.

With respect to the method for producing the paint composition of the present invention, there is no particular limitation, and a known method can be used. Generally, the paint composition is produced by mixing the above-described aqueous polyurethane resin dispersion and the above-mentioned additive, and adding thereto an aqueous medium, and adjusting the viscosity of the resultant composition to that in accordance with the application method employed for the composition.

Examples of materials to be coated with the paint composition include metals, plastics, inorganic materials, and wood.

Examples of application methods for the paint composition include bell application, spray coating, roll coating, shower coating, and dip coating.

(Coating composition)

As the coating composition of the present invention, the above-described aqueous polyurethane resin dispersion may be used, or an additive may be added to the aqueous polyurethane resin dispersion.

Examples of the additives include a plasticizer, an anti-foaming agent, a leveling agent, a mildewproofing agent, a rust preventive agent, a matting agent, a flame retardant, a tackifier, a thixotropic agent, a lubricant, an antistatic agent, a thinner, a thickener, a diluent, a pigment, a dye, an ultraviolet light absorber, a light stabilizer, an antioxidant, and a filler.

The coating composition of the present invention can be applied onto various substrates, such as a metal, a ceramic, a synthetic resin, nonwoven fabric, woven fabric, knitted fabric, and paper.

(Polyurethane resin film)

The polyurethane resin film of the present invention can be produced by applying a composition comprising the above-described aqueous polyurethane resin dispersion and drying the applied composition. As the composition comprising the aqueous polyurethane resin dispersion, the above-described aqueous polyurethane resin dispersion may be used, or an additive may be added to the aqueous polyurethane resin dispersion.

Examples of the additives include a plasticizer, an anti-foaming agent, a leveling agent, a mildewproofing agent, a rust preventive agent, a matting agent, a flame retardant, a tackifier, a thixotropic agent, a lubricant, an antistatic agent, a thinner, a thickener, a diluent, a pigment, a dye, an ultraviolet light absorber, a light stabilizer, an antioxidant, and a filler.

With respect to the method for producing the polyurethane resin film, there is no particular limitation, but, for example, there can be mentioned a method in which the above-mentioned aqueous polyurethane resin dispersion is applied onto a release substrate using a coating apparatus, and then dried, and the resultant polyurethane resin film is peeled off the release substrate.

With respect to the release substrate, there is no particular limitation, but examples include a glass substrate, plastic substrates, such as polyethylene terephthalate and polytetrafluoroethylene, and a metal substrate. The above substrates may have their surfaces treated with a release agent.

With respect to the coating apparatus, there is no particular limitation, but examples include a bar coater, a roll coater, a gravure coater, and an air spray.

With respect to the thickness of the polyurethane resin film of the present invention, there is no particular limitation, but the thickness is preferably 0.01 to 0.5 mm.

EXAMPLES

Hereinbelow, the present invention will be described in more detail with reference to the following Examples and Comparative Examples, which should not be construed as limiting the scope of the present invention.

[Synthesis Example 1]

Into a 10,000-ml ground-bottom glass flask equipped with a rectifying column, a stirrer, a thermometer, and a nitrogen gas introducing pipe, 3,870 g (43.0 mol) of dimethyl carbonate, 1,852 g (15.7 mol) of 1,6-hexanediol, 1,840 g (17.7 mol) of 1,5-pentanediol, and 0.10 g of titanium tetrabutoxide were charged, and the resultant mixture was subjected to transesterification reaction in a nitrogen gas flow under atmospheric pressure for 20 hours while stirring and distilling off a mixture of methanol and dimethyl carbonate. During the reaction, the reaction temperature was gradually increased from 95°C to 200°C, and the composition of the distillate was controlled so as to be or be approximately an azeotropic composition of methanol and dimethyl carbonate.

Subsequently, the pressure was gradually reduced to 30 mmHg while stirring and distilling off a mixture of methanol and dimethyl carbonate and a transesterification reaction was further conducted at 180°C for 15 hours. After completion of the reaction (or after completion of distilling off of methanol and dimethyl carbonate), the resultant reaction mixture was cooled to room temperature to obtain 4,220 g of polycarbonate diol (PCD-1).

The obtained polycarbonate diol had a number average molecular weight of 1,983 and a hydroxyl value of 56.6 mg KOH/g. Further, the obtained polycarbonate diol was subjected to alkali hydrolysis. As a result, it was found that the 1,5-pentanediol: 1,6-hexanediol ratio was 1:1 (molar ratio).

[Example 1]

Using a reaction apparatus equipped with a stirrer and a heater, 153 g of the polycarbonate diol (PCD-1) obtained in Synthesis Example 1, 2.5 g of 2,2-dimethylolpropionic acid (DMPA), and 39.4 g of isophorone diisocyanate (IPDI) in 87.0 g of N-methylpyrrolidone were heated in the presence of 0.2 g of dibutyltin dilaurate in a nitrogen atmosphere at 80 to 90°C for 3 hours. Then, 5.3 g of hydroxypivalic acid (HPA) was added to the resultant mixture, followed by heating at 90°C for 4 hours. At the time of completion of the urethane-forming reaction, the NCO group content was 2.04% by weight. The resultant reaction mixture was cooled to 80°C, and 6.4 g of triethylamine was added to the mixture and mixed. 263 g of the reaction mixture was added to 347 g of water while strongly stirring. Then, to the resultant mixture was added 7.8 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 2]

Using a reaction apparatus equipped with a stirrer and a heater, 311 g of the polycarbonate diol (PCD-1) obtained in Synthesis Example 1, 11.1 g of 2,2-dimethylolpropionic acid (DMPA), and 96.6 g of isophorone diisocyanate (IPDI) in 138 g of N-methylpyrrolidone were heated in the presence of 0.3 g of dibutyltin dilaurate in a nitrogen atmosphere at 80 to 90°C for 3 hours. Then, 6.4 g of hydroxypivalic acid (HPA) and 3.9 g of 1-butanol (BuOH) were added to the resultant mixture, followed by heating at 90°C for 4 hours. At the time of completion of the urethane-forming reaction, the NCO group content was 2.48% by weight. The resultant reaction mixture was cooled to 80°C, and 15.1 g of triethylamine was added to the mixture and mixed. 552 g of the reaction mixture was added to 798 g of water while strongly stirring. Then, to the resultant mixture was added 20.0 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 3]

Using a reaction apparatus equipped with a stirrer and a heater, 310 g of the polycarbonate diol (PCD-1) obtained in Synthesis Example 1, 8.3 g of 2,2-dimethylolpropionic acid (DMPA), and 90.2 g of isophorone diisocyanate (IPDI) in 134 g of N-methylpyrrolidone were heated in the presence of 0.3 g of dibutyltin dilaurate in a nitrogen atmosphere at 80 to 90°C for 3 hours. Then, 11.7 g of hydroxypivalic acid (HPA) was added to the resultant mixture, followed by heating at 90°C for 4 hours. At the time of completion of the urethane-forming reaction, the NCO group content was 2.55% by weight. The resultant reaction mixture was cooled to 80°C, and 17.7 g of triethylamine was added to the mixture and mixed. 538 g of the reaction mixture was added to 782 g of water while strongly stirring. Then, to the resultant mixture was added 17.0 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 4]

Using a reaction apparatus equipped with a stirrer and a heater, 310 g of the polycarbonate diol (PCD-1) obtained in Synthesis Example 1, 8.4 g of 2,2-dimethylolpropionic acid (DMPA), and 134 g of isophorone diisocyanate (IPDI) in 134 g of N-methylpyrrolidone were heated in the presence of 0.3 g of dibutyltin dilaurate in a nitrogen atmosphere at 80 to 90°C for 3 hours. Then, 15.5 g of hydroxypivalic acid (HPA) was added to the resultant mixture, followed by heating at 90°C for 4 hours. At the time of completion of the urethane-forming reaction, the NCO group content was 2.22% by weight. The resultant reaction mixture was cooled to 80°C, and 21.3 g of triethylamine was added to the mixture and mixed. 549 g of the reaction mixture was added to 791 g of water while strongly stirring. Then, to the resultant mixture was added 17.6 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 5]

Using a reaction apparatus equipped with a stirrer and a heater, 311 g of the polycarbonate diol (PCD-1) obtained in Synthesis Example 1, 5.5 g of 2,2-dimethylolpropionic acid (DMPA), and 81.8 g of isophorone diisocyanate (IPDI) in 130 g of N-methylpyrrolidone were heated in the presence of 0.3 g of dibutyltin dilaurate in a nitrogen atmosphere at 80 to 90°C for 3 hours. Then, 14.1 g of hydroxypivalic acid (HPA) was added to the resultant mixture, followed by heating at 90°C for 4 hours. At the time of completion of the urethane-forming reaction, the NCO group content was 1.91% by weight. The resultant reaction mixture was cooled to 80°C, and 17.6 g of triethylamine was added to the mixture and mixed. 511 g of the reaction mixture was added to 730 g of water while strongly stirring. Then, to the resultant mixture was added 14.1 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 6]

Using a reaction apparatus equipped with a stirrer and a heater, 311 g of the polycarbonate diol (PCD-1) obtained in Synthesis Example 1, 7.4 g of 2,2-dimethylolpropionic acid (DMPA), and 87.7 g of isophorone diisocyanate (IPDI) in 134 g of N-methylpyrrolidone were heated in the presence of 0.3 g of dibutyltin dilaurate in a nitrogen atmosphere at 80 to 90°C for 3 hours. Then, 39.7 g of 12-hydroxystearic acid (12-HSA) was added to the resultant mixture, followed by heating at 90°C for 4 hours. At the time of completion of the urethane-forming reaction, the NCO group content was 1.73% by weight. The resultant reaction mixture was cooled to 80°C, and 20.0 g of triethylamine was added to the mixture and mixed. 564 g of the reaction mixture was added to 832 g of water while strongly stirring. Then, to the resultant mixture was added 14.9 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 7]

Using a reaction apparatus equipped with a stirrer and a heater, 310 g of the polycarbonate diol (PCD-1) obtained in Synthesis Example 1, 7.2 g of 2,2-dimethylolpropionic acid (DMPA), and 87.6 g of isophorone diisocyanate (IPDI) in 140 g of N-methylpyrrolidone were heated in the presence of 0.3 g of dibutyltin dilaurate in a nitrogen atmosphere at 80 to 90°C for 3 hours. Then, 15.0 g of hydroxypivalic acid (HPA) was added to the resultant mixture, followed by heating at 90°C for 4 hours. At the time of completion of the urethane-forming reaction, the NCO group content was 2.39% by weight. The resultant reaction mixture was cooled to 80°C, and 19.8 g of triethylamine was added to the mixture and mixed. 553 g of the reaction mixture was added to 781 g of water while strongly stirring. Then, to the resultant mixture was added 19.1 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 8]

Using a reaction apparatus equipped with a stirrer and a heater, 282 g of the polycarbonate diol (PCD-1) obtained in Synthesis Example 1, 4.8 g of 2,2-dimethylolpropionic acid (DMPA), and 73.4 g of isophorone diisocyanate (IPDI) in 120 g of N-methylpyrrolidone were heated in the presence of 0.3 g of dibutyltin dilaurate in a nitrogen atmosphere at 80 to 90°C for 3 hours. Then, 12.5 g of hydroxypivalic acid (HPA) was added to the resultant mixture, followed by heating at 90°C for 4 hours. At the time of completion of the urethane-forming reaction, the NCO group content was 1.46% by weight. The resultant reaction mixture was cooled to 80°C, and 15.7 g of triethylamine was added to the mixture and mixed. 432 g of the reaction mixture was added to 633 g of water while strongly stirring. Then, to the resultant mixture were added 10.5 g of a 35% by weight aqueous diethylenetriamine (DETA) solution and 4.0 g of a 35% by weight aqueous 2-methylpentamethylenediamine (MPMD) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 9]

Using a reaction apparatus equipped with a stirrer and a heater, 275 g of the polycarbonate diol (PCD-1) obtained in Synthesis Example 1, 4.3 g of 2,2-dimethylolpropionic acid (DMPA), and 70.4 g of isophorone diisocyanate (IPDI) in 118 g of N-methylpyrrolidone were heated in the presence of 0.3 g of dibutyltin dilaurate in a nitrogen atmosphere at 80 to 90°C for 3 hours. Then, 12.5 g of hydroxypivalic acid (HPA) was added to the resultant mixture, followed by heating at 90°C for 4 hours. At the time of completion of the urethane-forming reaction, the NCO group content was 1.47% by weight. The resultant reaction mixture was cooled to 80°C, and 15.1 g of triethylamine was added to the mixture and mixed. 408 g of the reaction mixture was added to 587 g of water while strongly stirring. Then, to the resultant mixture were added 7.5 g of a 35% by weight aqueous diethylenetriamine (DETA) solution and 8.3 g of a 35% by weight aqueous 2-methylpentamethylenediamine (MPMD) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 60,000.

[Example 10]

Using a reaction apparatus equipped with a stirrer and a heater, 302 g of the polycarbonate diol (PCD-1) obtained in Synthesis Example 1, 5.3 g of 2,2-dimethylolpropionic acid (DMPA), and 77.0 g of isophorone diisocyanate (IPDI) in 129 g of N-methylpyrrolidone were heated in the presence of 0.3 g of dibutyltin dilaurate in a nitrogen atmosphere at 80 to 90°C for 3 hours. Then, 13.3 g of hydroxypivalic acid (HPA) was added to the resultant mixture, followed by heating at 90°C for 4 hours. At the time of completion of the urethane-forming reaction, the NCO group content was 1.30% by weight. The resultant reaction mixture was cooled to 80°C, and 16.5 g of triethylamine was added to the mixture and mixed. 407 g of the reaction mixture was added to 591 g of water while strongly stirring. Then, to the resultant mixture were added 3.6 g of a 35% by weight aqueous diethylenetriamine (DETA) solution and 12.2 g of a 35% by weight aqueous 2-methylpentamethylenediamine (MPMD) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 30,000.

[Example 11]

Using a reaction apparatus equipped with a stirrer and a heater, 538 g of ETERNACOLL UH-200 (registered trademark; polycarbonate diol, manufactured by Ube Industries, Ltd.; number average molecular weight: 2,037; hydroxyl value: 55.1 mg KOH/g; polycarbonate diol obtained by reacting 1,6-hexanediol with dimethyl carbonate), 15.7 g of 2,2-dimethylolpropionic acid (DMPA), and 186 g of 4,4'-dicyclohexylmethane diisocyanate (H12-MDI) in 317 g of N-methylpyrrolidone were heated in the presence of 0.5 g of dibutyltin dilaurate in a nitrogen atmosphere at 80 to 90°C for 3 hours. Then, 20.4 g of hydroxypivalic acid (HPA) was added to the resultant mixture, followed by heating at 90°C for 4 hours. At the time of completion of the urethane-forming reaction, the NCO group content was 1.51% by weight. The resultant reaction mixture was cooled to 80°C, and 31.9 g of triethylamine was added to the mixture and mixed. 436 g of the reaction mixture was added to 562 g of water while strongly stirring. Then, to the resultant mixture was added 13.4 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Example 12]

Using a reaction apparatus equipped with a stirrer and a heater, 280 g of ETERNACOLL UH-200 (registered trademark; polycarbonate diol, manufactured by Ube Industries, Ltd.; number average molecular weight: 2,037; hydroxyl value: 55.1 mg KOH/g; polycarbonate diol obtained by reacting 1,6-hexanediol with dimethyl carbonate), 8.8 g of 2,2-dimethylolpropionic acid (DMPA), and 98.6 g of 4,4'-dicyclohexylmethane diisocyanate (H12-MDI) in 166 g ofN-methylpyrrolidone were heated in the presence of 0.3 g of dibutyltin dilaurate in a nitrogen atmosphere at 80 to 90°C for 3 hours. Then, 27.4 g of 12-hydroxystearic acid (12-HSA) was added to the resultant mixture, followed by heating at 90°C for 4 hours. At the time of completion of the urethane-forming reaction, the NCO group content was 1.57% by weight. The resultant reaction mixture was cooled to 80°C, and 17.1 g of triethylamine was added to the mixture and mixed. 453 g of the reaction mixture was added to 596 g of water while strongly stirring. Then, to the resultant mixture was added 14.7 g of a 35% by weight aqueous diethylenetriamine (DETA) solution as a chain extender (C. E.) to obtain an aqueous polyurethane resin dispersion.
With respect to the obtained aqueous polyurethane resin dispersion, a molecular weight was measured. As a result, the weight average molecular weight (Mw) was 100,000 or more.

[Example 13]

Using a reaction apparatus equipped with a stirrer and a heater, 284 g of ETERNACOLL UH-200 (registered trademark; polycarbonate diol, manufactured by Ube Industries, Ltd.; number average molecular weight: 2,037; hydroxyl value: 55.1 mg KOH/g; polycarbonate diol obtained by reacting 1,6-hexanediol with dimethyl carbonate), 9.0 g of 2,2-dimethylolpropionic acid (DMPA), and 101 g of 4,4'-dicyclohexylmethane diisocyanate (H12-MDI) in 168 g of N-methylpyrrolidone were heated in the presence of 0.3 g of dibutyltin dilaurate in a nitrogen atmosphere at 80 to 90°C for 3 hours. Then, 40.0 g of 12-hydroxystearic acid (12-HSA) was added to the resultant mixture, followed by heating at 90°C for 4 hours. At the time of completion of the urethane-forming reaction, the NCO group content was 1.26% by weight. The resultant reaction mixture was cooled to 80°C, and 20.7 g of triethylamine was added to the mixture and mixed. 435 g of the reaction mixture was added to 576 g of water while strongly stirring. Then, to the resultant mixture was added 11.1 g of a 35% by weight aqueous diethylenetriamine (DETA) solution as a chain extender (C. E.) to obtain an aqueous polyurethane resin dispersion.
With respect to the obtained aqueous polyurethane resin dispersion, a molecular weight was measured. As a result, the weight average molecular weight (Mw) was 100,000 or more.

[Comparative Example 1]

Using a reaction apparatus equipped with a stirrer and a heater, 162 g of the polycarbonate diol (PCD-1) obtained in Synthesis Example 1 and 33.8 g of isophorone diisocyanate (IPDI) in 82.5 g of N-methylpyrrolidone were heated in the presence of 0.2 g of dibutyltin dilaurate in a nitrogen atmosphere at 80 to 90°C for 3 hours. Then, 7.7 g of hydroxypivalic acid (HPA) was added to the resultant mixture, followed by heating at 90°C for 4 hours. At the time of completion of the urethane-forming reaction, the NCO group content was 1.14% by weight. The resultant reaction mixture was cooled to 80°C, and 7.2 g of triethylamine was added to the mixture and mixed. 260 g of the reaction mixture was added to 343 g of water while strongly stirring. Then, to the resultant mixture was added 4.2 g of a 35% by weight aqueous diethylenetriamine (DETA) solution as a chain extender (C. E.), but an aqueous polyurethane resin dispersion having satisfactory storage stability was not able to be obtained.

[Comparative Example 2]

Using a reaction apparatus equipped with a stirrer and a heater, 150 g of the polycarbonate diol (PCD-1) obtained in Synthesis Example 1, 2.5 g of 2,2-dimethylolpropionic acid (DMPA), and 39.2 g of isophorone diisocyanate (IPDI) in 83.0 g of N-methylpyrrolidone were heated in the presence of 0.2 g of dibutyltin dilaurate in a nitrogen atmosphere at 80 to 90°C for 3 hours. Then, 3.2 g of 1-butanol (BuOH) was added to the resultant mixture, followed by heating at 90°C for 4 hours. At the time of completion of the urethane-forming reaction, the NCO group content was 1.68% by weight. The resultant reaction mixture was cooled to 80°C, and 2.0 g of triethylamine was added to the mixture and mixed. 262 g of the reaction mixture was added to 346 g of water while strongly stirring, but the reaction mixture was not dispersed in water, so that an aqueous dispersion was not able to be obtained.

[Comparative Example 3]

Using a reaction apparatus equipped with a stirrer and a heater, 130 g of the polycarbonate diol (PCD-1) obtained in Synthesis Example 1, 8.3 g of 2,2-dimethylolpropionic acid (DMPA), and 51.2 g of isophorone diisocyanate (IPDI) in 79.9 g of N-methylpyrrolidone were heated in the presence of 0.2 g of dibutyltin dilaurate in a nitrogen atmosphere at 80 to 90°C for 3 hours. Then, 4.2 g of 1-butanol (BuOH) was added to the resultant mixture, followed by heating at 90°C for 4 hours. At the time of completion of the urethane-forming reaction, the NCO group content was 2.63% by weight. The resultant reaction mixture was cooled to 80°C, and 6.0 g of triethylamine was added to the mixture and mixed. 259 g of the reaction mixture was added to 344 g of water while strongly stirring. Then, to the resultant mixture was added 10.4 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Comparative Example 4]

Using a reaction apparatus equipped with a stirrer and a heater, 170.8 g of the polycarbonate diol (PCD-1) obtained in Synthesis Example 1 and 35.2 g of isophorone diisocyanate (IPDI) in 86.4 g of N-methylpyrrolidone were heated in the presence of 0.2 g of dibutyltin dilaurate in a nitrogen atmosphere at 80 to 90°C for 3 hours. Then, 4.5 g of malic acid (MA) was added to the resultant mixture, followed by heating at 90°C for 4 hours. At the time of completion of the urethane-forming reaction, the NCO group content was 1.79% by weight. The resultant reaction mixture was cooled to 80°C, and 6.8 g of triethylamine was added to the mixture and mixed. 250 g of the reaction mixture was added to 326 g of water while strongly stirring, but the reaction mixture was not dispersed in water, so that an aqueous dispersion was not able to be obtained.

[Comparative Example 5]

Using a reaction apparatus equipped with a stirrer and a heater, 241 g of ETERNACOLL UH-200 (registered trademark; polycarbonate diol, manufactured by Ube Industries, Ltd.; number average molecular weight: 2,037; hydroxyl value: 55.1 mg KOH/g; polycarbonate diol obtained by reacting 1,6-hexanediol with dimethyl carbonate), 16.2 g of 2,2-dimethylolpropionic acid (DMPA), and 65.9 g of isophorone diisocyanate (IPDI) in 153 g of N-methylpyrrolidone were heated in the presence of 0.3 g of dibutyltin dilaurate in a nitrogen atmosphere at 80 to 90°C for 3 hours. Then, 6.5 g of 2-hydroxyacetic acid (glycolic acid: GA) was added to the resultant mixture, followed by heating until the NCO group was not detected. The resultant reaction mixture was cooled to 80°C, and 20.2 g of triethylamine was added to the mixture and mixed. 427 g of the reaction mixture was added to 660 g of water while strongly stirring to obtain an aqueous polyurethane resin dispersion.

With respect to the obtained aqueous polyurethane resin dispersion, a molecular weight was measured. As a result, the weight average molecular weight (Mw) was 21,000.

[Comparative Example 6]

Using a reaction apparatus equipped with a stirrer and a heater, 311 g of the polycarbonate diol (PCD-1) obtained in Synthesis Example 1, 20.2 g of 2,2-dimethylolpropionic acid (DMPA), and 90.2 g of isophorone diisocyanate (IPDI) in 135 g of N-methylpyrrolidone were heated in the presence of 0.3 g of dibutyltin dilaurate in a nitrogen atmosphere at 80 to 90°C for 7 hours. At the time of completion of the urethane-forming reaction, the NCO group content was 1.77% by weight. The resultant reaction mixture was cooled to 80°C, and 15.4 g of triethylamine was added to the mixture and mixed. 440 g of the reaction mixture was added to 655 g of water while strongly stirring. Then, to the resultant mixture was added 10.3 g of a 35% by weight aqueous diethylenetriamine (DETA) solution as a chain extender (C. E.) to obtain an aqueous polyurethane resin dispersion.

With respect to the obtained aqueous polyurethane resin dispersion, a molecular weight was measured. As a result, the weight average molecular weight (Mw) was 100,000 or more.

[Comparative Example 7]

Using a reaction apparatus equipped with a stirrer and a heater, 311 g of the polycarbonate diol (PCD-1) obtained in Synthesis Example 1, 5.5 g of 2,2-dimethylolpropionic acid (DMPA), and 81.7 g of isophorone diisocyanate (IPDI) in 130 g of N-methylpyrrolidone were heated in the presence of 0.3 g of dibutyltin dilaurate in a nitrogen atmosphere at 80 to 90°C for 3 hours. Then, 14.1 g of hydroxypivalic acid (HPA) was added to the resultant mixture, followed by heating at 90°C for 4 hours. At the time of completion of the urethane-forming reaction, the NCO group content was 2.03% by weight. The resultant reaction mixture was cooled to 80°C, and 15.3 g of triethylamine was added to the mixture and mixed. 484 g of the reaction mixture was added to 715 g of water while strongly stirring. Then, to the resultant mixture was added 24.1 g of a 35% by weight aqueous 2-methyl-1,5-pentanediamine (MPMD) solution as a chain extender (C. E.), but an aqueous polyurethane resin dispersion having satisfactory storage stability was not able to be obtained.

[Comparative Example 8]

Using a reaction apparatus equipped with a stirrer and a heater, 261 g of ETERNACOLL UH-200 (registered trademark; polycarbonate diol, manufactured by Ube Industries, Ltd.; number average molecular weight: 2,000; hydroxyl value: 56.1 mg KOH/g; polycarbonate diol obtained by reacting 1,6-hexanediol with dimethyl carbonate), 13.3 g of 2,2-dimethylolpropionic acid (DMPA), and 104 g of 4,4'-dicyclohexylmethane diisocyanate (H12-MDI) in 124 g of N-methylpyrrolidone were heated in the presence of 0.3 g of dibutyltin dilaurate in a nitrogen atmosphere at 90°C for 5 hours. At the time of completion of the urethane-forming reaction, the NCO group content was 2.44% by weight. The resultant reaction mixture was cooled to 80°C, and 12.0 g of triethylamine was added to the mixture and mixed. 475 g of the reaction mixture was added to 713 g of water while strongly stirring. Then, to the resultant mixture was added 25.1 g of a 35% by weight aqueous diethylenetriamine (DETA) solution as a chain extender (C. E.) to obtain an aqueous polyurethane resin dispersion.
With respect to the obtained aqueous polyurethane resin dispersion, a molecular weight was measured. As a result, the weight average molecular weight (Mw) was 100,000 or more.

[Comparative Example 9]

Using a reaction apparatus equipped with a stirrer and a heater, 341 g of ETERNACOLL UH-300 (registered trademark; polycarbonate diol, manufactured by Ube Industries, Ltd.; number average molecular weight: 2,945; hydroxyl value: 38.1 mg KOH/g; polycarbonate diol obtained by reacting 1,6-hexanediol with dimethyl carbonate), 16.0 g of 2,2-dimethylolpropionic acid (DMPA), and 109 g of 4,4'-dicyclohexylmethane diisocyanate (H12-MDI) in 197 g of N-methylpyrrolidone were heated in the presence of 0.4 g of dibutyltin dilaurate in a nitrogen atmosphere at 90°C for 5 hours. At the time of completion of the urethane-forming reaction, the NCO group content was 1.99% by weight. The resultant reaction mixture was cooled to 80°C, and 12.3 g of triethylamine was added to the mixture and mixed. 639 g of the reaction mixture was added to 827 g of water while strongly stirring. Then, to the resultant mixture was added 26.8 g of a 35% by weight aqueous diethylenetriamine (DETA) solution as a chain extender (C. E.) to obtain an aqueous polyurethane resin dispersion.
With respect to the obtained aqueous polyurethane resin dispersion, a molecular weight was measured. As a result, the weight average molecular weight (Mw) was 100,000 or more.
Physical properties were measured by the methods described below. The results are shown in Tables 1 and 2.

(1) Hydroxyl value: A hydroxyl value was measured in accordance with B method of JIS K 1557.
(2) Acid value of polyurethane prepolymer (A) (unit: mg KOH/g): An acid value was obtained by conversion to the weight of potassium hydroxide required for neutralizing 1 g of a sample (mg KOH/g), and determined by the following formula (3).

$$[\text{Acid value (mg KOH/g) of polyurethane prepolymer (A)}]$$
$$= [(\text{Millimole of acid group-containing polyol compound (b))} + (\text{Millimole of}$$
$$\text{compound (d) having one acid group and one hydroxyl group)}] \times 56.11/[\text{Total weight of}$$
$$\text{polycarbonate polyol compound (a), acid group-containing polyol compound (c),}$$
$$\text{polyisocyanate compound (b), and compound (d) having one acid group and one}$$
$$\text{hydroxyl group}] \qquad (3)$$

(3) Concentration of an end group derived from compound (d) having one acid group and one hydroxyl group and optionally used chain terminating agent (d-2) of the urethane resin (unit: mol/g): An concentration of an end group was determined from the following formula.

(Concentration of an end group)

= [(Mole of compound (d) having one acid group and one hydroxyl group) +

(Mole of chain terminating agent (d-2))]/(Urethane resin solids weight (g))

(4) Crosslinking density of the urethane resin (unit: mol/g): A crosslinking density was determined from the following formula.

(Crosslinking density of the urethane resin (mol/g))

= {(Mole of polyamine compound (B-1) having three or more amino group(s) and/or imino group(s) in total) × [(Number of amino group(s) and/or imino

group(s) per molecule) - 2]}/(Urethane resin solids weight (g))

(5) Concentration of an end acid group derived from compound (d) having one acid group and one hydroxyl group of the urethane resin (unit: mol/g): An end acid group concentration was determined from the following formula.

(Concentration of an end acid group derived from compound (d) having one acid group and one hydroxyl group)

= (Mole of compound (d) having one acid group and one hydroxyl

group)/(Urethane resin solids weight (g))

(6) Evaluation of flexibility (elastic modulus)

The flexibility was evaluated by measuring an elastic modulus by a tensile test.

[Preparation of a test specimen]

Each of the aqueous polyurethane resin dispersions in Examples 1 to 13 and Comparative Examples 1 to 9 was uniformly applied to a glass plate so that the thickness of the dried film became about 0.10 mm. Then, the applied dispersion was allowed to stand at room temperature for 16 hours, and then dried at 60°C for 2 hours and at 120°C for 2 hours, and then the resultant polyurethane resin film was peeled off the glass plate and evaluated by the method described below.

[Measurement of an elastic modulus]

With respect to the above-obtained polyurethane film, an elastic modulus was measured by a method in accordance with JIS K 7113. In the table below, a specimen such that the measurement of an elastic modulus is impossible is indicated by symbol "-", and one such that the formation of a film is impossible prior to the measurement is indicated by "Film impossible".

(7) Weight average molecular weight of the polyurethane resin in the aqueous polyurethane resin dispersion

A weight average molecular weight was measured by gel permeation chromatography (GPC), and a value determined by conversion from a calibration curve preliminarily prepared with the standard polystyrene was shown.

(8) Storage stability

With respect to each of the aqueous polyurethane resin dispersions in Examples 1 to 13 and Comparative Examples 1 to 9, the appearance was observed 7 days after the production to evaluate storage stability. The criteria for the evaluation are as follows.

○: No change occurred.

x: Precipitation of solids was observed.

[Table 1]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| (a) PCD-1 | | 75% | 71% | 73% | 65% | 74% | 69% | 73% | 74% | 75% | 75% | 0% | 0% | 0% |
| (a) PCD(UH200) | | 0% | 0% | 0% | 0% | 0% | 0% | 0% | 0% | 0% | 0% | 70% | 66% | 65% |
| (a) PCD(UH300) | | 0% | 0% | 0% | 0% | 0% | 0% | 0% | 0% | 0% | 0% | 0% | 0% | 0% |
| (c) DMPA | | 1% | 3% | 2% | 2% | 1% | 2% | 2% | 1% | 1% | 1% | 2% | 2% | 2% |
| (b) IPD1 | | 19% | 22% | 21% | 28% | 20% | 19% | 21% | 19% | 19% | 19% | 0% | 0% | 0% |
| (b) H12-MDI | | 0% | 0% | 0% | 0% | 0% | 0% | 0% | 0% | 0% | 0% | 24% | 23% | 23% |
| (d-2) BuOH | | 0% | 1% | 0% | 0% | 0% | 0% | 0% | 0% | 0% | 0% | 0% | 0% | 0% |
| (d) HPA | | 3% | 1% | 3% | 3% | 3% | 0% | 4% | 3% | 3% | 3% | 3% | 0% | 0% |
| (d) GA | | 0% | 0% | 0% | 0% | 0% | 0% | 0% | 0% | 0% | 0% | 0% | 0% | 0% |
| (d) 12-HSA | | 0% | 0% | 0% | 0% | 0% | 9% | 0% | 0% | 0% | 0% | 0% | 7% | 9% |
| (d-2) MA | | 0% | 0% | 0% | 0% | 0% | 0% | 0% | 0% | 0% | 0% | 0% | 0% | 0% |
| C.E. | (B-1) DETA | 2% | 2% | 1% | 1% | 1% | 1% | 2% | 1.1% | 0.8% | 0.4% | 2% | 2% | 1% |
| | (B-2) MPMD | 0% | 0% | 0% | 0% | 0% | 0% | 0% | 0.4% | 1.0% | 1.4% | 0% | 0% | 0% |
| AV (mgKOH/g) | | 18 | 18 | 20 | 25 | 20 | 23 | 23 | 21 | 21 | 21 | 21 | 21 | 25 |
| End group concentration ($\times 10^{-4}$mol/g) | | 2.35 | 2.58 | 2.83 | 3.12 | 3.09 | 3.10 | 3.10 | 3.23 | 3.40 | 3.64 | 5.69 | 2.82 | 4.25 |
| End acid group concentration ($10^{-4}$mol/g) | | 2.35 | 1.30 | 2.83 | 3.12 | 3.09 | 3.10 | 3.10 | 3.23 | 3.40 | 3.64 | 5.69 | 2.82 | 4.25 |
| Crosslinking density ($10^{-4}$mol/g) | | 1.39 | 1.63 | 1.65 | 1.42 | 1.25 | 1.19 | 1.59 | 1.09 | 0.81 | 0.40 | 1.50 | 1.54 | 1.21 |
| Storage stability | | ○ | ○ | ○ | ○ | ○ | ○ | ○ | ○ | ○ | ○ | ○ | ○ | ○ |

(continued)

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Elastic modulus (MPa) | 8 | 12 | 11 | 6 | 4 | 2 | 6 | 3 | 3 | 4 | 23 | 23 | 13 |
| Mw | >100000 | >100000 | >100000 | >100000 | >100000 | >100000 | >100000 | >100000 | 60000 | 30000 | >100000 | >100000 | >100000 |

EP 2 940 052 A1

[Table 2]

| | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|
| (a) PCD-1 | | 79% | 77% | 66% | 81% | 73% | 73% | 74% | 0% | 0% |
| (a) PCD(UH200) | | 0% | 0% | 0% | 0% | 0% | 0% | 0% | 67% | 0% |
| (a) PCD(UH300) | | 0% | 0% | 0% | 0% | 0% | 0% | 0% | 0% | 72% |
| (c) DMPA | | 0% | 1% | 4% | 0% | 5% | 5% | 1% | 3% | 3% |
| (b) IPDI | | 16% | 20% | 26% | 17% | 20% | 21% | 19% | 0% | 0% |
| (b) H12-MDI | | 0% | 0% | 0% | 0% | 0% | 0% | 0% | 27% | 23% |
| (d-2) BuOH | | 0% | 2% | 2% | 0% | 0% | 0% | 0% | 0% | 0% |
| (d) HPA | | 4% | 0% | 0% | 0% | 0% | 0% | 3% | 0% | 0% |
| (d) GA | | 0% | 0% | 0% | 0% | 2% | 0% | 0% | 0% | 0% |
| (d) 12-HSA | | 0% | 0% | 0% | 0% | 0% | 0% | 0% | 0% | 0% |
| (d-2) MA | | 0% | 0% | 0% | 2% | 0% | 0% | 0% | 0% | 0% |
| C.E | (B-1) DETA | 1% | 0% | 2% | 0% | 0% | 1% | 0% | 2% | 2% |
| | (B-2) MPMD | 0% | 0% | 0% | 0% | 0% | 0% | 2% | 0% | 0% |
| AV (mgKOH/g) | | 18 | 5 | 18 | 18 | 24 | 20 | 20 | 14 | 14 |
| End group concentration ($\times 10^{-4}$mol/g) | | 3.49 | 2.21 | 3.05 | 1.87 | 1.76 | 0 | 3.24 | 0 | 0 |
| End acid group concentration ($\times 10^{-4}$mol/g) | | 3.49 | 0 | 0 | 3.75 | 1.76 | 0 | 3.24 | 0 | 0 |
| Crosslinking density ($\times 10^{-4}$mol/g) | | 0.77 | 0 | 1.89 | 0 | 0 | 1.06 | 0 | 2.44 | 2.04 |
| Storage stability | | × | × | ○ | × | ○ | ○ | × | ○ | ○ |

24

(continued)

| | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|
| Elastic modulus (MPa) | - | - | 45 | - | Film impossible | 19 | - | 220 | 160 |
| Weight average molecular weight (Mw) | - | - | >100000 | - | 21000 | >100000 | - | >100000 | >100000 |

In Tables 1 and 2, "%" indicates % by weight for each compound when the urethane resin solids content is taken as 100% by weight. In the tables, the number of the amount (weight ratio) of the individual raw materials has been basically rounded off to the nearest whole digit, and therefore the sum of the amounts of all the raw materials of the urethane resin is not always 100.

The aqueous polyurethane resin dispersions obtained in Comparative Examples 1, 2, 4, and 7 had so poor storage stability that a weight average molecular weight and an elastic modulus of each film could not be measured.

INDUSTRIAL APPLICABILITY

In the present invention, there can be obtained an aqueous polyurethane resin dispersion which forms a coating film having a lowered elastic modulus, and therefore the obtained dispersion can be used as an aqueous polyurethane resin dispersion which forms a soft feel coating film and as a raw material for a soft feel paint composition.

**Claims**

1. An aqueous polyurethane resin dispersion comprising:

   a polyurethane resin dispersed in an aqueous medium, wherein
   the polyurethane resin is obtained by reacting (A) a polyurethane prepolymer with (B) a chain extender,
   the polyurethane prepolymer (A) is obtained by reacting at least (a) a polycarbonate polyol compound, (b) a polyisocyanate compound, (c) an acid group-containing polyol compound, and (d) a compound having one acid group and one hydroxyl group, and
   the chain extender (B) contains (B-1) a polyamine compound having three or more amino group(s) and/or imino group(s) in total.

2. The aqueous polyurethane resin dispersion according to claim 1, wherein the crosslinking density of the polyurethane resin is $0.2 \times 10^{-4}$ to $10 \times 10^{-4}$ mol/g.

3. The aqueous polyurethane resin dispersion according to claim 1 or 2, wherein the concentration of an end acid group derived from the compound (d) having one acid group and one hydroxyl group in the polyurethane resin is $1.5 \times 10^{-4}$ to $10 \times 10^{-4}$ mol/g.

4. The aqueous polyurethane resin dispersion according to any one of claims 1 to 3, wherein the polyurethane prepolymer (A) is obtained by optionally further reacting (d-2) a chain terminating agent, wherein the concentration of an end group derived from the compound (d) having one acid group and one hydroxyl group and the optionally used chain terminating agent (d-2) in the polyurethane resin is $3.0 \times 10^{-4}$ to $10 \times 10^{-4}$ mol/g.

5. The aqueous polyurethane resin dispersion according to any one of claims 1 to 4, wherein the compound (d) having one acid group and one hydroxyl group is a hydroxycarboxylic acid having 6 or more carbon atoms.

6. The aqueous polyurethane resin dispersion according to any one of claims 1 to 5, wherein the polyurethane prepolymer (A) has an acid value of 10 to 22 mg KOH/g.

7. The aqueous polyurethane resin dispersion according to any one of claims 1 to 6, wherein the polyurethane prepolymer (A) has an acid value of 14 to 19 mg KOH/g.

8. A paint composition comprising the aqueous polyurethane resin dispersion according to any one of claims 1 to 7.

9. A coating composition comprising the aqueous polyurethane resin dispersion according to any one of claims 1 to 7.

10. A polyurethane resin film composition which is produced from the aqueous polyurethane resin dispersion according to any one of claims 1 to 7.

## INTERNATIONAL SEARCH REPORT

| | International application No. |
|---|---|
| | PCT/JP2013/083010 |

**A. CLASSIFICATION OF SUBJECT MATTER**
*C08G18/65(2006.01)i, C09D5/02(2006.01)i, C09D175/12(2006.01)i*

According to International Patent Classification (IPC) or to both national classification and IPC

**B. FIELDS SEARCHED**

Minimum documentation searched (classification system followed by classification symbols)
C08G18/00-18/87, C09D5/02, C09D175/12

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)
CA/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-226444 A (Nippon Polyurethane Industry Co., Ltd.), 21 August 2001 (21.08.2001), claim 1; paragraphs [0026], [0048], [0052]; table 1, example 2; table 2, example 6; paragraphs [0056], [0062] (Family: none) | 1-10 |
| Y | JP 10-273513 A (Toagosei Co., Ltd.), 13 October 1998 (13.10.1998), claim 1; paragraphs [0008] to [0009], [0012] to [0015] (Family: none) | 1-10 |

☒ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 March, 2014 (10.03.14) | 18 March, 2014 (18.03.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/083010

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2004-231813 A  (Arakawa Chemical Industries, Ltd.), 19 August 2004 (19.08.2004), claims 1 to 3; paragraphs [0004], [0007], [0018]; examples (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10120757 B
- JP 2001521953 A
- JP 2004231813 A